# EUROPÄISCHE PATENTANMELDUNG

(11) **EP 2 141 369 A1**
(43) Veröffentlichungstag der Anmeldung: **06.01.2010**
(21) Anmeldenummer: 09164018.5
(22) Anmeldetag: 29.06.2009
(51) Int. Cl.: F16B 37/06

(54) **Befestigungselement**

(30) Priorität: 03.07.2008 DE 102008032696
(71) Anmelder: Arnold & Shinjo GmbH & Co. KG, 74677 Dörzbach (DE)
(72) Erfinder: Beck, Friedrich, 74613, Verrenberg (DE)
(74) Vertreter: Patentanwälte Ruff, Wilhelm, Beier, Dauster & Partner

(57) **Zusammenfassung**

Zur Anbringung eines Befestigungselements an einem ein Loch aufwesenden Bauteil wird vorgeschlagen, an dem Bauteil um das Loch herum einen Kragen oder Wulst auszubilden. Das Befestigungselement weist einen kegelstumpfförmigen außen verrippten Befestigungsansatz auf, dessen Außendurchmesser an seiner breitesten Stelle etwa dem Durchmesser des Lochs in dem Bauteil entspricht. Die Außenseite des Befestigungsansatzes des Befestigungselements ist verrippt. Radial außerhalb des Befestigungsansatzes ist eine Nut (5) in dem Befestigungselement vorhanden, die in einer Anlagefläche (4) des Befestigungselements ausgebildet ist. Das Befestigungselement wird so auf das Bauteil aufgepresst, dass der Befestigungsansatz in die Bohrung eingreift und der die Bohrung umgebende Wulst so verformt wird, dass er die Nut in der Anlagefläche des Befestigungselements ausfüllt. Es entsteht dadurch ein Formschluss in Auszugsrichtung und wegen der Verrippung der Außenseite des Befestigungsansatzes auch ein Formschluss in Drehrichtung.

## Beschreibung

Die Erfindung betrifft das Befestigen von Gegenständen an metallischen Strukturen.

Bei Blechbauteilen, an denen Gegenstände angeschraubt werden müssen, ist es wegen der geringen Dicke des Blechs nicht möglich, ein Gewinde mit ausreichender Zugfestigkeit anzubringen. Daher ist es dort bekannt, Stanzmuttern zu verwenden, die bei entsprechendem Druck sich das Loch in dem Blech selbst stanzen und die das Blech so in eine Nut hinein verformen, dass ein Formschluss in Auszugsrichtung gegeben ist. Wenn die Nut von einer Kreisform abweicht, kann damit auch ein Formschluss in Drehrichtung erreicht werden.

Voraussetzungen für die Verwendung von Einstanzmuttern ist aber, dass das Blech relativ dünn ist, da von der Rückseite her eine Unterlage vorhanden sein muss, die die Verformung in die hinterschnittene Nut hinein ermöglicht.

Auch bei der Verwendung von Nietmuttern ist es erforderlich, dass das Blech eine bestimmte Dicke nicht überschreitet.

Bei einer bekannten Nietmutter (DE 102007024494) kann zwar auch dickeres Blech verwendet werden. Aber auch hier muss der Rand des Blechs ebenso verformt werden wie der in das Loch eingreifende Ansatz der Nietmutter.

Sowohl bei Stanzmuttern als auch bei Nietmuttern ist die Verwendung einer Matrize auf der Rückseite des Bauteils erforderlich.

Bei dickeren metallischen Strukturen, bei denen eine Verformung der metallischen Struktur wegen der großen Dicke nicht möglich ist, ist die Verwendung von Einstanzmuttern und von Nietmuttern nicht möglich.

Der Erfindung liegt die Aufgabe zu Grunde, eine Befestigungsmöglichkeit zu schaffen, die ebenso einfach durchzuführen ist wie bei dünren Blechen, die aber auch bei dicken metallischen Strukturen verwendbar ist.

Zur Lösung dieser Aufgabe schlägt die Erfindung ein Befestigungselement mit den im Anspruch 1 genannten Merkmalen, eine Verwendung dieses Befestigungselements und ein Verfahren zur Anbringung des Befestigungselements vor. Weiterbildungen der Erfindung sind Gegenstand von Unteransprüchen.

Durch diese Ausbildung lässt sich das Befestigungselement mit der metallischen Struktur verbinden, sofern diese einen entsprechenden Wulst aufweist. Dann kann das Befestigungselement auf die metallische Struktur aufgelegt werden, so dass der Wulst in die Nut zu liegen kommt. Wird nun Druck ausgeübt, so verformt sich der Wulst in der Weise, dass er in die Nut hinein verformt wird. Da die Nut hinterschnitten ist, entsteht eine Verbindung mit einem Formschluss in Auszugsrichtung. Durch die Verrippung oder anders ausgedrückt eine Wellenform oder eine unebene Oberfläche der einen Nutflanke lässt sich der Formschluss verbessern. Die Verformung geschieht solange, bis die Anlagefläche auf der Oberfläche der metallischen Struktur aufliegt.

In Weiterbildung der Erfindung kann vorgesehen sein, dass die Rippen der Verrippung derart angeordnet sind, dass sie quer zur Anlagefläche verlaufen. Dann wirkt der Formschluss in erster Linie in Drehrichtung. Dies ist insofern sinnvoll, da der Formschluss in Auszugsrichtung schon durch den Hinterschnitt der Nut und die Verformung des Wulstes verwirklicht wird.

Es hat sich herausgestellt, dass es besonders sinnvoll ist, de radial innere Nutflanke der Nut mit den Rippen beziehungsweise Vorsprüngen und Rücksprüngen zu versehen.

Es kann in Weiterbildung vorgesehen sein, dass die äußere Nutflanke der Nut glatt ausgebildet ist.

In nochmaliger Weiterbildung der Erfindung kannvorgesehen sein, dass die radial innere Nutflanke schräg gegenüber der Anlagefläche verläuft, insbesondere angenähert auf einer Kegelfläche. Auf einer echten Kegelfläche kann sie deswegen nicht liegen, weil sie ja die Rippen aufweist. Die Anordnung auf einer angenäherten Kegelfläche bildet eine besmders sinnvolle Möglichkeit, wie der Hinterschnitt der Nut verwirklicht werden kann.

Bei der radial äußeren Nutflanke kann sich dagegen um eine Zylinder-mantelfläche handeln.

In nochmaliger Weiterbildung der Erfindung kann vorgesehen sein, dass die innere Nutflanke von der Außenseite eines über die Ebene der Analgefläche vorspringenden Befestigungsvorsprungs gebildet ist. Dieser Befestigungsvorsprung kann dann in eine innerhalb des Wulstes angeordnete Vertiefung oder ein durchgehendes Loch in der metallischen Struktur eingreifen. Die Anordnung eines solchen Befestigungsvor-sprungs hat den Vorteil, dass die Fläche, an der die Verrippung ausgebildet ist, größer wird. Darüber hinaus kann der Befestigungsvorsprung zur Ausrichtung und Zentrierung des Befestigungselements dienen.

Da das Befestigungselement dazu dienen soll, an der metallischen Struktur irgendetwas zu befestigen, kann es beispielsweise eine Innen-bohrung aufweisen, die als Sacklochbohrung oder auch als durchgehende Bohrung ausgebildet sein kann. Damit kann dann eine Welle, ein Zapfen oder dergleichen an der metallischen Struktur mithilfe des Befestigungselements gelagert oder angebracht werden.

Insbesondere kann natürlich vorgesehen sein, dass die Bohrung ein Gewinde aufweisen kann, so dass das Befestigungselement als Mutter dienen kann.

Es ist aber auch die Ausbildung möglich, bei der an dem Befestigungselement ein Zapfen oder ein Stehbolzen ausgebildet ist.

Das Befestigungselement wird folgendermaßen verwendet. An dem metallischen Bauteil ist um die Bohrung herum ein Wulst ausgebildet, der über die Befestigungsfläche vorsteht. Die Innenseite des Wulstes ver-läuft beispielsweise bündig mit der Wand der Bohrung. Das Befesitgungselement ist so auf die Bohrung und den Wulst abgestimmt, dass die Anordnung der Nut in der Anlagefläche mit der Anordnung und der Größe des Wulstes übereinstimmt. Das Befestigungselement wird auf den Wulst aufgelegt und angepresst, bis die Anlagefläche an der Oberfläche des Bauteils anliegt. Bei diesem Vorgang wird der Wulst in die Nut hinein verformt, wobei er die Nut dann ausfüllt. Da die Nut hinterschnitten ist, entsteht dadurch eine formschlüssige Verbindung zwischen dem Bauteil und dem Befestigungselement. Wegen der Verrippung ist diese Verbindung auch in Drehrichtung formschlüssig.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfhdung sowie anhand der Zeichnung. Hierbei zeigen:
- Figur 1: die perspektivische Ansicht eines Befestigungselements nach der Erfindung;
- Figur 2: ebenfalls eine perspektivische Darstellung des Befestigungselements von schräg unten;
- Figur 3: die Zuordnung zwischen einem Befestigungselement und einem metallischen Bauteil mit einer Bohrung;
- Figur 4: das Ergebnis der Verbindung zwischen dem Befestigungs-element und dem Bauteil.

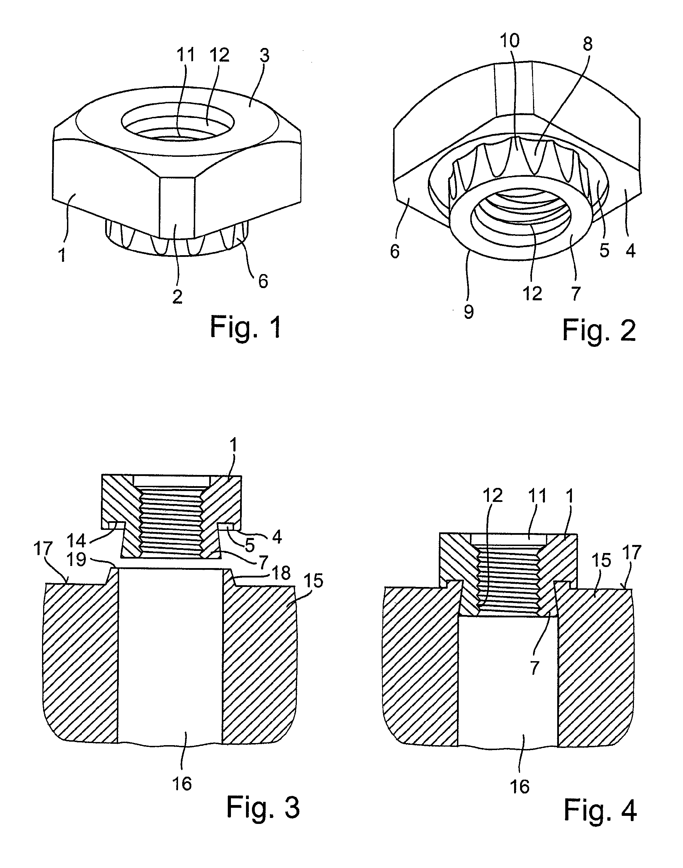

In Figur 1 ist ein als Mutter ausgebildetes Befestigungselement dargestellt. Das Befestigungselement enthält einen Korpus 1, der einen etwa quadratischen Querschnitt mit abgeschrägten Ecken 2 aufweist. Die nach oben gerichtete Oberseite 3 ist leicht abgerundet. An der Unterseite, in Figur 2 zu sehen, ist eine Anlagefläche 4 gebildet, die in einer Ebene liegt. Innerhalb dieser Anlagefläche 4 ist eine Nut 5 vorhanden, die an ihrer radialen Innenseite von der Außenwand 6 eines Ansatzes 7 begrenzt wird. Die Nut 5 weist einen ebenen Nutboden auf, der parallel zur Anlagefläche 4 verläuft. Die Außenseite des Befestigungsansatzes 7 liegt ungefähr auf einer Kegelfläche, deren gedachte Spitze oberhalb der Vorderseite 3 angeordnet ist. Der Kegel erweitert sich also in Richtung nach unten.

Die Außenwand des Befestigungsansatzes 7 weist Vertiefungen 8 auf, deren Tiefe von der freien Stirnseite 9 des Befestigungsansatzes 7, in Figur 2 unten zu sehen, in Richtung auf die Nut 5 zunimmt. Zwischen diesen Vertiefungen sind Vorsprünge 10 ausgebildet, so dass in Umfangsrichtung abwechselnd Vertiefungen und Vorsprünge vorhanden sind. Dies wird in der Anmeldung hier als Verrippung bezeichnet.

Das Befestigungselement wird von einer Bohrung 11 durchsetzt, die mit einem Gewinde 12 versehen ist. Die Achse der Bohrung ist mit dem Gewinde 12 verläuft senkrecht zur Anlagefläche 4.

Die Figur 3, auf die jetzt Bezug genommen wird, zeigt im oberen Teil einen Querschnitt durch ein solches Befestigungselement in einem gegenüber den Figuren 1 und 2 kleineren Maßstab. Von dem Befestigungsansatz 7 kann man hier sehen, dass er insgesamt etwa kegel-stumpfförmig ausgebildet ist. Die Basis des Kegels ist dabei von dem Korpus 1 weg gewandt. Die Außenseite des Befestigungsansatzes bildet gleichzeitig die innere Nutflanke der Nut 5, die einen, wie bereits erwähnt, ebenen Nutboden 14 aufweist. Dieser Nutboden 14 verläuft parallel zu der Anlagefläche 4.

Figur 3 zeigt, wie ein solches Befestigungselement mit einem Bauteil 15 verbunden wird. Das Bauteil 15 weist eine Bohrung 16 auf, de an der Oberseite 17 ausmündet. Es könnte sich auch um eine Sacklochbchrung handeln. Die Bohrung 16 ist in der Oberseite 17 von einem Wulst 18 umgeben, die man auch als Kragen bezeichnen könnte. Dieser Wulst 18 beziehungsweise Kragen weist eine Innenseite auf, die eine Fortsetzung der Wand der Bohrung 16 ist. Seine Außenseite verläuft leicht kegelförmig. Der Wulst 18 weist eine ebene Stirnkante 19 auf. Der Befesit-gungsansatz 7 entspricht in seinem Außendurchmesser ungefähr dem Innendurchmesser der Bohrung 16 des Bauteils 15. Das Befestigungselement wird nun auf das Bauteil 15 aufgesetzt und vorgeschoben, wobei der Befestigungsansatz 7 in die Bohrung 16 eindringt. Das Befestgungselement wird weiter vorgeschoben, bis der Wulst 18 in die Nut 5 zu liegen kommt. Dann wird Druck auf das Befestigungselement ausgeübt, und dieses weiter vorwärts geschoben. Dabei wird der Wulst 18 so verformt, dass er sich in der Nut 5 verbreitert und diese ausfüllt. Die Innenwand des Wulstes 18 verformt sich dabei auch nach innen. Das Ergebnis ist in Figur 4 dargestellt. Der Wulst 18 hat sich so verformt, dass er die Nut 5 vollständig ausfüllt. Aufgrund der Kegelform des Befestgungsansatzes 7 hat sich der Wulst 18 nach innen verformt, so dass allein dadurch schon ein Formschluss zwischen dem Bauteil 15 und dem Befestigungselement entstanden ist. Zusätzlich entsteht ein Fomschluss dadurch, dass die Nut hinterschnitten ist. Aufgrund der Vertefungen 8 und Vorsprünge 10 in der Außenseite des Befestigungsansäzes 7 ist auch ein Formschluss in Drehrichtung vorhanden.

Zur Anbringung eines Befestigungselements an einem ein Loch aufweisenden Bauteil wird vorgeschlagen, an dem Bauteil um das Loch herum einen Kragen oder Wulst auszubilden. Ein Befestigungselement weist einen kegelstumpfförmigen außen verrippten Befestigungsansatz auf, dessen Außendurchmesser an seiner breitesten Stelle etwa dem Durchmesser des Lochs in dem Bauteil entspricht. Die Außenseite des Befestigungsansatzes des Befestigungselements ist verrippt. Radial außerhalb des Befestigungsansatzes ist eine Nut in dem Befestigungselement vorhanden, die in einer Anlagefläche des Befestigungselements ausgebildet ist. Das Befestigungselement wird so auf das Bauteil aufgepresst, dass der Befestigungsansatz in die Bohrung eingreift undder die Bohrung umgebende Wulst so verformt wird, dass er die Nut in der Anlagefläche des Befestigungselements ausfüllt. Es entsteht dadurch ein Formschluss in Auszugsrichtung und wegen der Verrippung der Außenseite des Befestigungsansatzes auch einen Fomschluss in Drehrichtung. Das Befestigungselement selbst wird dabei nicht verformt. Der Befestigungsansatz ist kürzer als die Dicke des Bauteils.

Die Verwendung einer Matrize ist dabei nicht erforderlich.

## Patentansprüche

1. Befestigungselement zur Anbringung an einer metallischen Struktur (15), mit
1.1 einem Korpus (1), der
1.2 eine ebene Anlagefläche (4) und
1.3 eine in der Anlagefläche (4) ausgebildete hinterschnittene Nut (5) mit einem Nutboden (14) und zwei Nutflanken aufweist von denen
1.4 mindestens eine Nutflanke verrippt ausgebildet ist.

2. Befestigungselement nach Anspruch 1, bei dem die Rippen in Richtung quer zur Anlagefläche (4) verlaufen.

3. Befestigungselement nach Anspruch 1 oder 2, bei dem die radial innere Nutflanke verrippt ausgebildet ist.

4. Befestigungselement nach einem der vorhergehenden Ansprüche, bei dem die äußere Nutflanke glatt ausgebildet ist.

5. Befestigungselement nach einem der vorhergehenden Ansprüche, bei dem die innere Nutflanke der Nut (5) schräg gegenüber der Anlagefläche (4) verläuft und insbesondere angenähert auf einer Kegelfläche liegt.

6. Befestigungselement nach einem der vorhergehenden Ansprüche, bei dem die radial äußere Nutflanke auf einer Zylindermantelfläche liegt.

7. Befestigungselement nach einem der vorhergehenden Ansprüche, bei dem die innere Nutflanke von der Außenseite eines über die Ebene der Anlagefläche (4) vorspringenden Befestigungsvorsprungs (7) gebildet ist und die Verrippung sich vorzugsweise bis zum Ende des Befestigungsvorsprungs (7) erstreckt.

8. Befestigungselement nach einem der vorhergehenden Ansprüche, mit einer Innenbohrung (11).

9. Befestigungselement nach Anspruch 8, bei dem die Innenbohrung (11) ein Innengewinde (12) aufweist.

10. Befestigungselement nach einem der Ansprüche 1 bis 7, mit einem einstückig ausgebildeten Stehbolzen.

11. Verwendung eines Befestigungselements nach einem der vordergehenden Ansprüche zur Anbringung an einem metallischen, ein Loch (16) mit einem dieses umgebenden Wulst (18) aufweisenden Bauteil (15), wobei das Befestigungselement mit seiner Nut (5) auf den Wulst (18) aufgepresst wird und dieser sich in die Nut (5) hinein verformt.

12. Verwendung nach Anspruch 11, bei dem die Dicke des Bauteils (15) größer ist als die Axialerstreckung des Befestigungsvorsprungs (7).

13. Verfahren zum Anbringen eines Gewindes an einem ein Loch (16) aufweisenden Bauteil (15), bei dem um das Loch (16) herum ein Wulst (18) ausgebildet wird und auf den Wulst (18) ein Befestgungselement nach einem der Ansprüche 1 bis 10 aufgepresst wird, wobei sich der Wulst (18) in die Nut (5) hinein verformt und einen Formschluss mit dem Befestigungselement bildet.

14. Befestigungsanordnung aus einem ein Loch (16) aufweisenden Bauteil (15) und einem Befestigungselement nach einem der Ansprüche 1 bis 10, bei dem das Befestigungselement mit seinem Befestigungsansatz in das Loch (16) des Bauteil (15) eingreift und ein das Loch (16) umgebender Wulst (18) in die Nut (5) des Befestigungselements hinein verformt ist.

15. Befestigungsanordnung nach Anspruch 14, bei der das Befesitgungselement auf das Bauteil (15) aufgepresst und der Wulst (18) durch das Aufpressen in die Nut (5) des Befestigungselements hinein verformt ist.
